(19) Europäisches Patentamt / European Patent Office / Office européen des brevets

(11) **EP 4 218 005 B1**

(12) **EUROPEAN PATENT SPECIFICATION**

(45) Date of publication and mention
of the grant of the patent:
**22.10.2025 Bulletin 2025/43**

(21) Application number: **21782900.1**

(22) Date of filing: **21.09.2021**

(51) International Patent Classification (IPC):
**G10L 13/02** (2013.01)     **G06N 3/04** (2023.01)
**G10L 13/047** (2013.01)     **G06N 3/047** (2023.01)

(52) Cooperative Patent Classification (CPC):
**G10L 13/02; G06N 3/047;** G10H 2250/161;
G10H 2250/211; G10H 2250/311; G10L 13/047

(86) International application number:
**PCT/EP2021/075894**

(87) International publication number:
**WO 2022/063758 (31.03.2022 Gazette 2022/13)**

(54) **EFFICIENT CIRCUIT FOR SAMPLING**

EFFIZIENTE ABTASTSCHALTUNG

CIRCUIT EFFICACE D'ÉCHANTILLONNAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.09.2020  GB 202015208**

(43) Date of publication of application:
**02.08.2023 Bulletin 2023/31**

(73) Proprietor: **Myrtle Software Limited
Cambridge, Cambridgeshire CB2 3AH (GB)**

(72) Inventor: **DAVIS, Samuel George
Cambridge Cambridgeshire CB2 3AH (GB)**

(74) Representative: **Boult Wade Tennant LLP
Salisbury Square House
8 Salisbury Square
London EC4Y 8AP (GB)**

(56) References cited:
**US-A1- 2020 051 583     US-A1- 2020 265 829**

- **MIN-JAE HWANG ET AL: "LP-WaveNet: Linear
  Prediction-based WaveNet Speech Synthesis",
  ARXIV.ORG, CORNELL UNIVERSITY LIBRARY,
  201 OLIN LIBRARY CORNELL UNIVERSITY
  ITHACA, NY 14853, 29 November 2018
  (2018-11-29), XP081612614**

- **YASUDA YUSUKE ET AL: "Effect of Choice of
  Probability Distribution, Randomness, and
  Search Methods for Alignment Modeling in
  Sequence-to-Sequence Text-to-Speech
  Synthesis Using Hard Alignment", ICASSP 2020 -
  2020 IEEE INTERNATIONAL CONFERENCE ON
  ACOUSTICS, SPEECH AND SIGNAL
  PROCESSING (ICASSP), IEEE, 4 May 2020
  (2020-05-04), pages 6724 - 6728, XP033793207,
  DOI: 10.1109/ICASSP40776.2020.9053546**

- **TJANDRA ANDROS ET AL: "Machine Speech
  Chain", IEEE/ACM TRANSACTIONS ON AUDIO,
  SPEECH, AND LANGUAGE PROCESSING, IEEE,
  USA, vol. 28, 29 February 2020 (2020-02-29),
  pages 976 - 989, XP011779609, ISSN: 2329-9290,
  [retrieved on 20200319], DOI: 10.1109/
  TASLP.2020.2977776**

- **RYAN ELOFF ET AL: "Unsupervised acoustic
  unit discovery for speech synthesis using
  discrete latent-variable neural networks",
  ARXIV.ORG, CORNELL UNIVERSITY LIBRARY,
  201 OLIN LIBRARY CORNELL UNIVERSITY
  ITHACA, NY 14853, 16 April 2019 (2019-04-16),
  XP081169904**

**EP 4 218 005 B1**

- **TJANDRA ANDROS ET AL: "End-to-end Feedback Loss in Speech Chain Framework via Straight-through Estimator", ICASSP 2019 - 2019 IEEE INTERNATIONAL CONFERENCE ON ACOUSTICS, SPEECH AND SIGNAL PROCESSING (ICASSP), IEEE, 12 May 2019 (2019-05-12), pages 6281 - 6285, XP033566032, DOI: 10.1109/ICASSP.2019.8683480**

**Description**

**Field of the disclosure**

The present disclosure relates to the sampling of unnormalized log probabilities. In particular, the present disclosure relates to the sampling of unnormalized log probabilities for artificial intelligence (A.I.) applications.

**Background**

Text to speech (TTS) systems are systems which aim to artificially synthesize human speech from a text input. The quality of a TTS system is judged by its similarity to the human voice and its ability to be understood easily.

One method of synthesizing human speech is to concatenate sound fragments together to form recognisable words and sounds. This method is generally known as concatenative TTS. Concatenative TTS typically uses a large library of speech fragments that can be concatenated to produce complete words and sounds. Speech synthesized by concatenative TTS can produces unnatural cadences and tone which may sound strange to the human ear.

Another known method synthesizing human speech is the use of neural networks to synthesize speech, commonly known as neural text to speech (neural TTS). Neural TTS uses machine learning technologies to generate synthesized speech from text that resembles a human voice. One known neural TTS algorithm is WaveNet. WaveNet uses a deep neural network for generating human sounding speech. WaveNet directly models waveforms of human speech using a neural network trained with recordings of real speech.

The WaveNet algorithm generates an audio waveform. The audio waveform is a sequence of integer values, or samples, which can have values in a given range that is defined by the audio bit depth. For example, a common audio bit depth is 8, resulting in 256 possible levels for the audio waveform (e.g. [0, 255]).

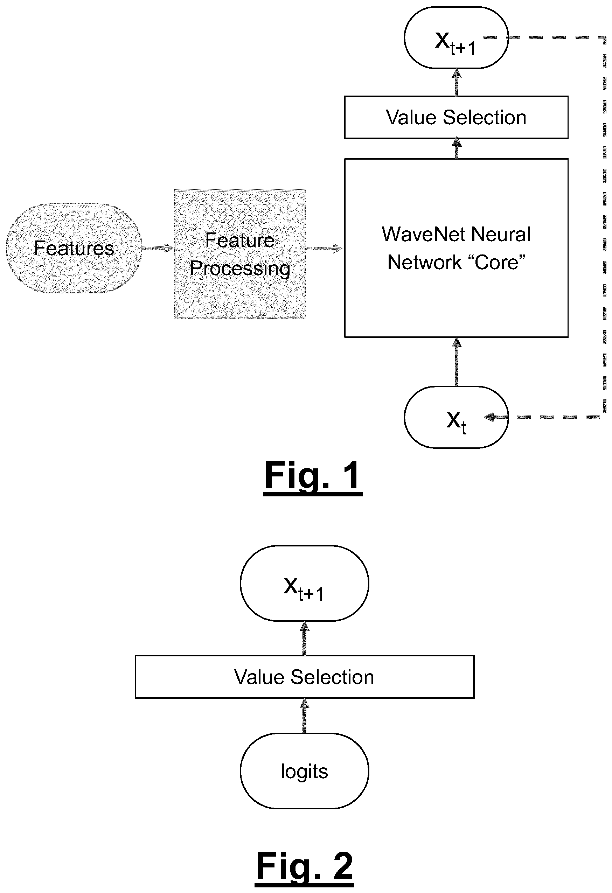

Fig. 1 shows an overview diagram of the WaveNet algorithm. For an audio waveform x, where $x_t$ is the sample at step t in the sequence, the WaveNet algorithm is to generate the next sample $x_{t+1}$. Let $h$ denote the audio features. The WaveNet model produces a probability distribution over all possible values given all previous samples and the audio features:

$$p(x_{t+1}|x_1,\ldots,x_t,\boldsymbol{h})$$

A single output value needs to be selected from this distribution in order to have a sequence of integer samples for the waveform. For example, for a bit depth of 8, $p$ produces a vector of length 256 denoting the probability of each possible sample.

Probabilistic sampling is an important part of machine learning. Typically, machine learning algorithms are trained to produce unnormalized log probabilities, rather than $p$ directly. These unnormalized log probabilities can be normalized to produce $p$.

In order to synthesize speech, the WaveNet algorithm samples from the probability distribution $p$. In order to synthesize speech with a suitable bandwidth, the probability distribution should be sampled frequently. For example, to synthesize speech with 16 kHz audio, a sample should be generated every 62.5 μs.

One known method of sampling unnormalized log probabilities to simply select the unnormalized log probabilities with the largest magnitude. This equates to sampling the mode, or most likely value of an unnormalized log probability distribution. The ArgMax operation can be used to perform such a sampling operation.

Another known method of sampling unnormalized log probabilities is to apply the Softmax function to the unnormalized log probabilities. The softmax function calculates a probability distribution from the set of unnormalized log probabilities having, wherein the probabilities have normalized values. The method then involves sampling from the resulting probability distribution, for example using inverse transform sampling.

Another known method (third method) of sampling unnormalized log probabilities is to take the exponent of each of the set of unnormalized log probabilities and keep a running total of the resulting values. The total sum of all of the values can be multiplied by a value drawn from a uniform distribution between 0 and 1. The sample to select is then found by searching for the position of the scaled total within the running total values.

The present invention seeks to provide a solution, or at least a commercially useful alternative, to the problem of sampling unnormalized log probabilities in a TTS system.

US 2020/265829 discloses a synthesis engine for generating artificial human speech.

US 2020/051583 discloses a method of synthesizing speech from text using neural networks.

Min-Jae Hwang et al, "LP-WaveNet: Linear Prediction-based WaveNet Speech Synthesis", discloses a linear prediction based waveform generation method.

## Summary

The present inventors have realised that using the Argmax operation to sample unnormalized log probabilities generated by a neural network for the synthesis of audio samples introduces distortion in to the audio samples generated. For example, in a TTS system, the speech samples generated have an unnatural sound.

The present inventors have also realised that other methods of sampling a set of unnormalized log probabilities result in a large number of computing operations to implement. For a set of K unnormalized log probabilities, Softmax-based approaches require K applications of an exponential function, (K-1) additions, K divisions, 1 draw from a uniform distribution function, and a search.

Similarly, the third method discussed above also requires K applications of an exponential function, K-1 additions, 1 draw from a uniform distribution, 1 multiplication, and a search.

According to a first aspect of the disclosure, a method of synthesizing an audio stream sample using a processor is provided. The method comprises:

generating a set of unnormalized log probabilities using a neural network, each unnormalized log probability associated with a possible value for the audio stream sample;

sampling a Gumbel distribution for each of the unnormalized log probabilities;

adding the samples from the Gumbel distribution to each of the respective unnormalized log probabilities to generate a set of modified log probabilities, each modified log probability associated with a possible value for the audio stream sample;

selecting the possible value of the audio stream sample associated with the largest modified log probability from the set of modified log probabilities as the audio stream sample.

The method of the first aspect of the disclosure uses the properties of the Gumbel distribution to select a value for an audio stream sample from a set of modified log probabilities which is statistically equivalent to selecting the speech stream sample by sampling from the probability distribution defined by the set of unnormalized log probabilities. The method according to the first aspect can be implemented on a processor using fewer computing operations than methods which involve multiple applications of an exponential function (e.g. Softmax based methods).

As the method according to the first aspect is statistically equivalent to samples produced by Softmax-based methods, the audio stream sample generated by the method may be used to produce realistic sounding speech as part of a TTS system. The method according to the first aspect may be applied to TTS systems for the synthesis of speech stream samples. The method according to the first aspect may also be applied to the synthesis of other audio samples using a neural networks. For example, neural networks may be used to generate audio samples for the synthesis of music, or noise cancellation. As such, an audio sample according to the disclosure includes a speech stream sample, a music stream sample, or a noise cancellation sample.

In some embodiments, the set of unnormalized log probabilities is generated as an array wherein an index of each unnormalized log probability in the array is associated with a respective possible value for the audio stream sample. As such, the index of the array may be used to efficiently store the possible value associated with each unnormalized log probability. The method according to the first aspect can then return an index associated with the largest modified log probability as the audio stream sample. Of course, in other embodiments, the possible value associated with each unnormalized log probability may be stored as a separate value in the array.

In some embodiments, the audio stream sample is an N-bit number. In some embodiments, N is at least 8, 16, 32, or 64. As such, for each audio stream sample there will be $2^N$ possible values for the audio stream sample. Accordingly the method according to the first aspect may be used to efficiently generate audio samples for an N-bit audio stream.

In some embodiments, sampling the Gumbel distribution for each of the unnormalized log probabilities comprises generating a random number using a Pseudo Random Number Generator (PRNG) circuit, and looking-up an address in a lookup table based on the random number, wherein the lookup table comprises samples from a Gumbel distribution. In some embodiments, the PNRG circuit comprises a Linear-Feedback Shift Register (LFSR) circuit configured to generate the random number. Accordingly, samples of the Gumbel distribution may be generated in a computationally efficient manner.

In some embodiments, the random number generated by the LFSR circuit is an M-bit random number, where M is less than N. In some embodiments, M may be at least 1, 2, or 3 less than N (e.g. $M \leq N-1$). By using a M-bit random number, where M is less than N, a balance between the bit depth of the Gumbel samples generated and the size of the LFSR circuit relative to the overall size of the processor (based on N) may be provided.

In some embodiments, M may be no greater than 15, 12, 10, 7 or 5. In some embodiments, M is at least 3. As such, in some embodiments, M may be selected as a value between 3 and 15. Such values of M may provide a good balance between the bit depth of the Gumbel samples generated and the circuit size for the LFSR circuit. In some embodiments, the LFSR circuit may comprise at least P shift registers, where P is greater than N. In some embodiments, P is at least 3 greater than N (i.e. P ≥ N+3). Accordingly, the PRNG circuit may be provided using shift registers as a LFSR circuit in a computationally efficient manner.

In some embodiments, a data bus provides the set of unnormalized log probabilities from the neural network to the processor in parallel, wherein the samples from the Gumbel distribution are added to the unnormalized log probabilities in parallel. As such, the method according to the first aspect may process at least some of the set of unnormalized log probabilities in parallel. Thus, the method according to the first aspect may be performed in a computationally efficient manner.

In some embodiments, the data bus provides all $2^N$ unnormalized log probabilities of the set of log probabilities in parallel to the processor in one clock cycle.

In some embodiments, the data bus provides less than $2^N$ unnormalized log probabilities of the set of unnormalized log probabilities in parallel per clock cycle of the processor. As such, the method according to the first aspect receives and samples the set of unnormalized log probabilities over multiple clock cycles of the processor. By providing the set of unnormalized log probabilities over multiple clock cycles, the overall circuit size for the processor may be reduced relative to a fully parallel implementation.

In some embodiments, selecting the possible value of the audio stream sample associated with the largest modified log probability from the set of modified log probabilities comprises using a plurality of comparator circuits arranged as a comparator tree structure. Each comparator circuit is arranged to compare two modified log probabilities and select the possible value of the audio stream sample associated with the largest modified log probability. The comparator tree structure allows the plurality of comparator circuits to compare the modified log probabilities in parallel using a computationally efficient circuit.

In some embodiments, a clock cycle of the processor has a frequency of at least: 200 MHz, 250 MHz, 300 MHz or 500 MHz. In some embodiments, an audio stream sample is generated from a set of unnormalized log probabilities in less than 200 ns, or less than 190 ns, 180 ns, or 170 ns. As such, the method of the first aspect may be performed with a limited computational budget. The method of the first aspect may be performed on a timescale which is suitable for the generation of TTS audio with a bandwidth of at least 16 KHz. In other embodiments, the method of the first aspect may be performed on a timescale which is suitable for the generation of TTS audio with a bandwidth of at least: 22 kHZ, 32 kHz, 44 kHz or 64 kHz.

In some embodiments, the processor comprises a Field Programmable Gate Array (FPGA), or an Application Specific Integrated Circuit (ASIC). As such, the method of the first aspect may be implemented on hardware which is dedicated to the generation of TTS audio.

According to a second aspect of the disclosure, an audio stream synthesizing circuit for synthesizing an audio stream sample is provided. The audio stream synthesizing circuit is configured to receive a set of unnormalized log probabilities from a neural network, wherein each unnormalized log probability is associated with a possible value for the audio stream sample. The audio stream synthesizing circuit comprises a Gumbel distribution sampling circuit, an adding circuit, and a value selecting circuit. The Gumbel distribution sampling circuit is configured to generate a plurality of samples of the Gumbel distribution. The adding circuit is configured to add the plurality of samples of the Gumbel distribution to the set of unnormalized log probabilities to generate a set of modified log probabilities where each modified log probability is associated with a possible value for the audio stream sample. The value selecting circuit is configured to select the possible value of the audio stream sample associated with the largest modified log probability from the set of modified log probabilities as the audio stream sample.

As such, the audio stream synthesizing circuit of the second aspect is configured to implement the method of the first aspect of the disclosure.

In some embodiments, the set of unnormalized log probabilities is received as an array wherein an index of each unnormalized log probability in the array is associated with a respective possible value for the audio stream sample.

In some embodiments, the audio stream sample is an N-bit number. In some embodiments, N is at least 8, 16, 32, or 64.

In some embodiments, the Gumbel distribution sampling circuit comprises a lookup table circuit comprising samples from a Gumbel distribution, and a Pseudo Random Number Generator (PRNG) circuit configured to generate random numbers corresponding to addresses of the lookup table circuit. In some embodiments, the PNRG circuit comprises a Linear-Feedback Shift Register (LFSR) circuit configured to generate the random number. In some embodiments, the random number generated by the LFSR circuit is an M-bit random number, where M is less than N. Accordingly, the Gumbel distribution sampling circuit may be implanted in a computationally efficient manner.

In some embodiments, the audio stream synthesizing circuit comprises a data bus. The audio stream synthesizing circuit may be configured to receive the set of unnormalized log probabilities from the neural network in parallel using the data bus. The adding circuit may be configured to add the samples from the Gumbel distribution to the unnormalized log probabilities in parallel. For example, in some embodiments, the audio stream sampling circuit may receive all $2^N$ unnormalized log probabilities of the set of unnormalized log probabilities in parallel.

In some embodiments, the data bus is configured to provide less than $2^N$ unnormalized log probabilities of the set of unnormalized log probabilities in parallel per clock cycle of the audio stream synthesizing circuit. As such, the audio stream sampling circuit may generate at least a portion of the modified set of log probabilities in parallel. As such, in some embodiments, the audio stream sampling circuit may receive the set of unnormalized log probabilities over multiple clock cycles of the audio stream synthesizing circuit.

In some embodiments, the value selecting circuit comprises a plurality of comparator circuits arranged as a comparator tree structure, each comparator circuit configured to compare two modified log probabilities and select the possible value of the audio stream sample associated with the largest modified log probability. Accordingly, the value selecting circuit may determine the largest modified log probability from a plurality of modified log probabilities in parallel manner which is computationally efficient.

In some embodiments, a clock cycle of the audio stream synthesizing circuit has a frequency of at least: 200 MHz, 250 MHz, 300 MHz, or 500 MHz. In some embodiments, the audio stream sample is generated from a set of unnormalized log probabilities in less than 200 ns, or less than 190 ns, 180 ns, or 170 ns. Accordingly the audio stream sample may be generated from the set of unnormalized log probabilities within a computational budget which is suitable for producing TTS audio with a bandwidth of at least 16 kHz. As such, in some embodiments, the audio stream synthesizer circuit is a speech stream synthesizer circuit for the synthesis of a speech stream sample.

In some embodiments, the audio stream synthesizing circuit is implemented as Field Programmable Gate Array (FPGA), or an Application Specific Integrated Circuit (ASIC).

According to a third aspect of the disclosure, a computer program comprising instructions to cause a processor to execute the steps of the first aspect is provide. In some embodiments, the processor is an audio stream synthesizing circuit according the second aspect of the disclosure.

According to a fourth aspect of the disclosure, a computer-readable medium having stored thereon the computer program of the third aspect is provided.

## Brief description of the figures

Aspects of the present disclosure will be described, by way of example only, with reference to the following drawings, in which:

- Figure 1 shows a block diagram of representative of the WaveNet algorithm;
- Figure 2 shows a block diagram of a method for generating an speech stream sample from a set of unnormalized log probabilities;
- Figure 3 shows a block diagram of a speech stream synthesizing circuit according to an embodiment of the disclosure.

## Detailed description

According to an embodiment of this disclosure, a speech stream synthesizing circuit 1 is provided. The speech stream synthesizing circuit 1 is configured to receive a set of unnormalized log probabilities for possible values of the speech stream sample from a neural network and generate a speech stream sample. The speech stream synthesizing circuit 1 may be provided as part of a Text To Speech (TTS) system for synthesizing human sounding speech from a text input. For example, according to one embodiment of the disclosure, the speech stream synthesizing may be provided as part of a system configured to implement the WaveNet algorithm.

The WaveNet algorithm is an autoregressive neural network which has a general structure as shown in Fig. 1. The WaveNet algorithm generates audio waveforms. A speech stream is a sequence of integer values ($x_t$), or samples, which can have values in a given range that is defined by the audio bit depth. For example, a common speech waveform bit depth is 8, such that a given speech stream sample can have one of 256 possible values or levels ([0, 255]). Let $x_t$ be the speech stream sample at step $t$ in the sequence. Let $h$ denote the audio features input to the WaveNet algorithm. The WaveNet model produces a probability distribution over all possible values given all previous samples and the audio features:

$$p(x_{t+1}|x_1,\ldots,x_t,\boldsymbol{h})$$

A single output value needs to be selected from this distribution in order to have a sequence of integer samples for the waveform. For example, for speech stream with a bit depth of 8, $p$ produces a vector of length 256 denoting the probability of each possible sample.

In some embodiments, the audio features $h$ may comprise one or more mel spectrograms. The mel spectrogram may be generated by a neural network. For example, in some embodiments the mel spectrograms may be generated by a Tacotron 2 neural network model. Methods for generating audio features $h$ are well known to the skilled person, so are not discussed in detail herein. The audio features may be generated by other components of the speech synthesizer circuit 1, or may be provided to the speech synthesizer circuit 1 from another circuit.

The Neural Network Core of the TTS system shown in Fig. 1 does not provide *p* such that it can be directly sampled. Rather, the neural network core generates a set of unnormalized log probabilities (often known as logits). *p* can be calculated from the set of unnormalized log probabilities by but it is computationally expensive to do so. The embodiments of the disclosure provide a method for sampling the set of unnormalized log probabilities which is equivalent to sampling *p* without the computational expense of calculating *p*.

Fig. 2 shows an overview block diagram of the process for converting the set of unnormalized log probabilities generated by the Neural Network Core of the TTS system into a speech stream sample. The value selection block receives the set of unnormalized log probabilities from the Neural Network Core and outputs an integer value as the next speech stream sample. The speech stream synthesizing circuit 1 is configured to provide the functionality of the value selection block shown in Fig. 2. Of course, the speech stream synthesizing circuit 1 may also include additional circuitry for implementing other parts of a TTS algorithm. That is to say, the speech stream synthesizing circuit may also include other circuitry for implementing other parts of the TTS algorithm, for example other components configured to implement parts of a WaveNet algorithm (e.g. the Neural Network Core). As such, in some embodiments, the speech stream synthesizing circuit 1 may include all the components of a TTS system. In other embodiments the speech stream synthesizing circuit 1 may provide a circuit which is dedicated to performing the value selection block as part of a TTS system.

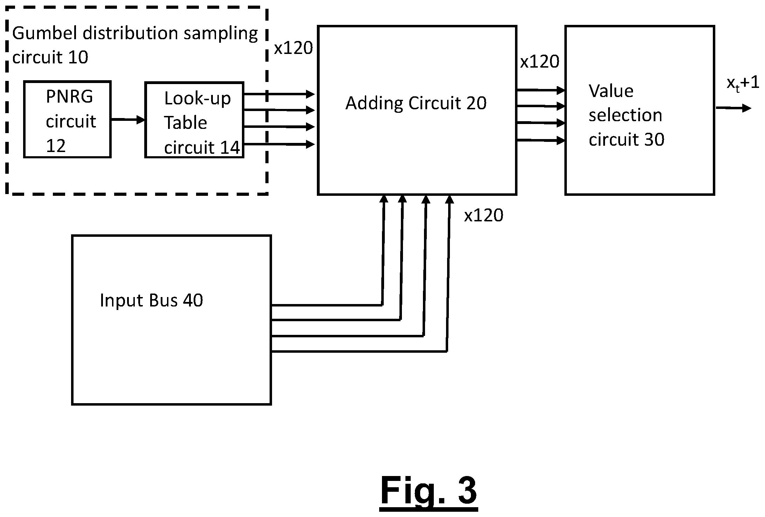

Fig. 3 shows a block diagram of a circuit to implement the value selection block of Fig. 2. As such, Fig. 3 shows a diagram of a speech stream synthesizing circuit 1 according to an embodiment of the disclosure. The speech stream synthesizing circuit 1 is configured to generate a speech stream sample from a set of unnormalized log probabilities provided by a neural network. In the embodiment of Fig. 3, the speech stream synthesizing circuit 1 may be configured to generate a speech stream sample from provided by a neural network core via the WaveNet algorithm. The speech stream sample generated may be an N-bit number, where N is a positive integer. For example, in some embodiments, N may be at least: 64, 32, 16, 8 or 4.

The speech stream synthesizing circuit 1 of Fig. 3 comprises a Gumbel distribution sampling circuit 10, an adding circuit 20 and a value selecting circuit 30. In some embodiments of the disclosure, for example as shown in Fig. 3, the speech stream synthesizing circuit may also comprise an input bus 40.

The Gumbel distribution sampling circuit 10 is configured to generate a plurality of samples of the Gumbel distribution.

The PRNG circuit is configured to generate a random number. In this disclosure, the term random number encompasses pseudo random numbers generated by a PRNG circuit 12 and the like. As such, the term random number includes numbers that are truly random, and also a sequence of pseudo random numbers.

The PRNG circuit 12 of Fig. 3 may be implemented as a Linear-feedback Shift Register (LFSR) circuit. The LFSR circuit is configured to generate a (pseudo) random number. The random number generated is an M-bit positive integer. In the embodiment of Fig. 3, M=7, although in other embodiments other values may be used. The 7-bit random number may be generated using 13 shift registers arranged in a LFSR circuit. LFSR circuits are known to the skilled person and so are not further discussed herein. The length of the LFSR determines the frequency that the PRNG sequence repeats. In the embodiment of Fig. 3, for a 7-bit number, a sequence of 13 shit registers produces a sequence of random numbers that are sufficiently random for the purposes of sampling a Gumbel distribution. As such, a (pseudo) random number may be generated by the LFSR circuit in a computationally efficient manner.

The Lookup Table circuit 14 comprises samples from a Gumbel distribution. In the embodiment of Fig. 3, the lookup table circuit 14 contains 2^M entries (where M is the bit depth of the random number generated by the PRNG circuit 12. In the embodiment of Fig. 3, M=7, and so the lookup table circuit comprises 128 entries. Each entry in the lookup table circuit 14 is addressable by one of the 2^M random numbers generated by the PRNG circuit 12. Each entry in the lookup table circuit 14 comprises a sample from the Gumbel distribution. As such, where:

$$y_i \in [0, 2^N - 1] \quad x_i \in [0, 2^N - 1]$$

is one of the random numbers generated by the PRNG circuit, the entries in the lookup table circuit 14 store values for:

$$-log(-log(y_i \, / \, (2^N - 1))) \quad -log(-log(x_i \, / \, (2^N - 1)))$$

.

In the embodiment of Fig. 3, each value may be stored in the lookup table circuit 14 as a block floating point (BFP) number. Block floating-point arithmetic is a form of floating-point arithmetic that can be used on a fixed-point processors. For BFP numbers, a block of numbers are assigned a single exponent (rather than each number having its own exponent, as in floating-point). The exponent is typically determined by the number in the block with the largest magnitude. In the embodiment of Fig. 3, each value may be stored as at least a 24 bit BFP number. In some embodiments, each value may be stored as at least a 32, 64, or 128 bit BFP number. Of course, in other embodiments each value could be stored in other known data formats (e.g. fixed point representations or floating point representations). In the embodiment of fig. 3, a BFP number is stored to allow for simplified addition of numbers in the adding circuit 20.

The Gumbel distribution sampling circuit 10 is configured to output samples of the Gumbel distribution. The Gumbel distribution sampling circuit 10 is configured to output a sample of the Gumbel distribution for each of the $2^N$ unnormalized log probabilities used to generate a speech stream sample. The samples may be output from the Gumbel distribution sampling circuit 10 sequentially, or in parallel. In the embodiment of Fig. 3, the samples from the lookup table circuit 14 are output in parallel to the adding circuit 20. In some embodiments, the parallel output of the Gumbel distribution sampling circuit 10 may have the same number of outputs as the number of parallel inputs on the input bus 40. For example, in the embodiment of Fig. 3, the Gumbel distribution sampling circuit 10 outputs 120 samples of the Gumbel distribution in parallel to the adding circuit 20.

In some embodiments, such as shown in Fig. 3, the set of unnormalized log probabilities are sent from the Neural Network Core over input bus 40. The Neural Network Core provides the set of unnormalized log probabilities and the associated possible values for the speech stream sample as an array. That is to say, the set of unnormalized log probabilities and the associated possible values for the speech stream sample are structured as an array. In some embodiments, the set of unnormalized log probabilities are provided as an array where the index of the array represents the possible value of the speech stream sample associated with each unnormalized log probability. In other embodiments, a two dimensional array could be used to provide the set of unnormalized log probabilities and the associated possible values for the speech stream sample.

Input bus 40 is configured to transfer the set of unnormalized log probabilities generated by the Neural Network Core to the adding circuit 20. The input bus 40 is configured to transfer the set of unnormalized log probabilities in parallel. In some embodiments, all of the set of unnormalized log probabilities for calculating a speech stream sample are transferred in a single clock cycle of the speech stream synthesizer 1. In other embodiments, at least some of the set of unnormalized log probabilities are transferred in a single clock cycle of the speech stream synthesizer 1. In the embodiment of Fig. 3, the input bus 40 is configured to transfer 120 unnormalized log probabilities from the set to the adding circuit 20 each clock cycle, although other widths of data bus may also be used. As such, the input bus 40 is configured to transfer less than $2^N$ unnormalized log probabilities per clock cycle. Accordingly, the complete set of unnormalized log probabilities for a single speech stream sample are transferred over a plurality of clock cycles.

Whilst the embodiment of Fig. 3 uses a parallel input bus 40 to transfer a set of unnormalized log probabilities over multiple clock cycles, in other embodiments a data bus may be provided to transfer the set of unnormalized log probabilities in a single clock cycle. In other embodiments, a serial data bus could be used to transfer single the set of unnormalized log probabilities one at a time (i.e. one unnormalized log probability per clock cycle).

Each unnormalized log probability transferred by the input bus 40 may be provided as a BFP number. In some embodiments, each unnormalized log probability may be provided as at least a 32, 64, or 128 bit BFP number. In some embodiments, each unnormalized log probability may be provided in the same format as the numbers generated by the Gumbel distribution sampling circuit 10. For example, in the embodiment of Fig. 3, each unnormalized log probability may be provided as a 24 bit BFP number.

The adding circuit 20 is circuit configured to add the plurality of samples of the Gumbel distribution to the set of unnormalized log probabilities to generate a set of modified log probabilities. In the embodiment of Fig. 3, the adding circuit 20 is configured to add the set of unnormalized log probabilities transferred by the input bus 40 to the samples of the Gumbel distribution output by the Gumbel distribution sampling circuit 10. In the embodiment of Fig. 3, the adding circuit is configured to perform an element-wise addition of the each of the unnormalized log probabilities to a respective sample from the Gumbel distribution sampling circuit 10. As discussed above, the input bus 40 and the Gumbel distribution sampling circuit 10 output data in parallel, with the same number of parallel outputs. Thus, the adding circuit may efficiently perform the addition in an elementwise manner.

The adding circuit 20 may comprise a plurality of adders. In the embodiment of Fig. 3, the adder circuit 20 comprises 120 adders. Each adder is configured to add a Gumbel sample to a respective unnormalized log probability. By adding a sample from the Gumbel distribution to each of the unnormalized log probabilities, a set of modified log probabilities is calculated. The set of modified log probabilities comprises $2^N$ modified log probabilities, with each modified log probability having an associated possible value for the speech stream sample. Where the set of unnormalized log probabilities is provided as an array, the set of modified log probabilities may also be generated as an array. As such, the index of the array of modified log probabilities may provide the associated possible value for the speech stream sample..

In some embodiments, the adding circuit 20 may also comprise a modified log probability lookup table. The results of the adders may be stored in the modified log probability lookup table of the adding circuit 20 for output to the value selection circuit 30. Each modified log probability may be stored as a BFP number in the modified log probability lookup table. In the embodiment of Fig. 3, each of the modified log probabilities is stored in the same formal is the respective unnormalized log probability input (i.e. 24-bit BFP), although in other embodiments any suitable format for the values may be used.

The adding circuit 20 is configured to output the set of modified log probabilities to the value selection circuit 30. The adding circuit 20 may output the modified log probabilities in series, or in parallel. In the embodiment of Fig. 3, the adding circuit 20 outputs the modified log probabilities in parallel. For example, in the embodiment of Fig. 3, the adding circuit 20 outputs the 120 modified log probabilities from the set of modified log probabilities per clock cycle. As such, the parallel output of the adding circuit 20 is the same as the parallel input from the input bus 40 and the Gumbel distribution sampling circuit 10. Such a configuration allows for a computationally efficient configuration of the speech stream synthesizer 1.

The value selection circuit 30 is configured to select the possible value of the speech stream sample associated with the largest modified log probability from the set of modified log probabilities as the speech stream sample.

**In** the embodiment of Fig. 3, the value selecting circuit 30 comprises a plurality of comparator circuits. Each comparator circuit is configured to compare two modified log probabilities and select the possible value associated with the largest modified log probability. The plurality of comparator circuits are arranged as a comparator tree structure. **In** the comparator tree structure, the comparator circuits are arranged in a series of layers. The outputs of two comparator circuits in the first layer are used as inputs to a comparator circuit in the second layer. The comparator tree structure includes sufficient layers to allow a single possible value to be selected from all the inputs to the first layer. In the embodiment of Fig. 3, the value selecting circuit 30 comprises a first layer comprising at least 60 comparator circuits. Accordingly, all 120 values of the modified log probabilities may be compared by the value selecting circuit 30 at the same time. Seven layers are provided in the embodiment of Fig. 3 to reduce the number of modified log probabilities for consideration from 120 to 1.

Where the complete set of modified log probabilities is provided to the value selecting circuit 30 over multiple clock cycles (such as in the embodiment of Fig. 3), the value selecting circuit may include a selected value lookup table to store the output of the comparator tree as an intermediate result from the value selecting circuit. As such, an output (a modified log probability and associated possible value for the speech stream sample) from the comparator tree for one clock cycle may be stored by the value selecting circuit 30 as an intermediate result for comparison against outputs calculated in subsequent clock cycles.

The value selecting circuit 30 is configured to keep track of the possible value for the speech stream sample value associated with each modified log probability. In some embodiments, the index of each modified log probability provided as part of the array to the value selecting circuit 30 may be stored along with its associated modified log probability in each layer. For example, the index and associated modified log probability may be stored in one or more lookup tables.

The value selecting circuit 30 is configured to select a final value for the speech stream sample based on the largest modified log probability from the set of modified log probabilities and output the final value as the next speech stream sample. The speech stream sample is output as an N bit number. This process is statistically equivalent to sampling from the distribution $p$ which is derivable from the set of unnormalized log probabilities provided by the Neural Network core.

The speech stream synthesizing circuit 1 may be configured to calculate a plurality of speech stream samples over time. As such, the speech stream synthesizing circuit 1 may repeat the functionality described above in order to generate a continuous stream of speech samples. The speech stream samples generated may resemble human speech due to the statistical method used to sample the unnormalized log probabilities calculated by the Neural Network Core.

In some embodiments, the speech stream synthesizer circuit 1 may be implemented on a Field Programmable Gate Array. For example, a Gumbel distribution sampling circuit 10 for a single value may be implemented on a FPGA using 20 Flip-Flops (FF) and 49 Lookup Tables (LUT). In the embodiment of Fig. 3, where 120 samples of the Gumbel distribution are calculated in parallel, the Gumbel distribution sampling circuit 10 uses 2400 FF and 5880 LUT to operate on the full 120 data values on a single clock cycle. Each LUT is able to store 64 bits of information.

In the embodiment of Fig. 3, the comparator tree of the value selection circuit 30 may be implemented to store (64+32+16+8+4+2+1) intermediate results for both modified log probabilities and associated index (or possible value of speech stream sample), at 32bits each. Additional register stages may also be provided to improve pipelining. As such, the comparator tree of the value selection circuit may be implemented using 32bits*(64+32+16+8+4+2+1)*2 = 8,576 FFs (assuming 2 pipeline stages per comparator).

The adding circuit 20 can be implemented by reusing logic in the rest of the speech stream synthesizer circuit 1. For example, in some embodiments, a speech stream synthesizer circuit 1 may comprise an adding circuit which is configured to perform other computational operations. The adding circuit 20 can thus be implemented by time sharing the use of the adding circuit 20 with other parts of the speech stream synthesizing circuit 1. For example, in some embodiments, the adding circuit 20 may be provided as part of a circuit configured to perform dot product matrix operations. As such, the elementwise addition of the adding circuit 20 may be performed by time sharing an adding circuit 20 with other parts of the speech stream synthesizing circuit 1. Of course, in other embodiments of the disclosure, the speech stream synthesizing circuit 1 may include an adding circuit 20 which is dedicated to the elementwise addition step.

Accordingly, the speech stream synthesizing circuit 1 of Fig. 3 may be configured to process 120 unnormalized log probabilities in parallel using circuit resources of around 8,816 FF and 5,880 LUT. This circuit size is much smaller than that which would be required to sample 120 unnormalized log probabilities values using the softmax function and inverse transform sampling due, at least in part, to the reduction in the number of computing operations performed by methods according to this disclosure.

In other embodiments, a speech stream synthesizing circuit 1 designed to work on a single data width bus would require approximately 84FFs and 49LUTS - an extremely small circuit suitable for an embedded application.

Latency is also very critical for WaveNet implementation as the full network has a stringent latency budget of 62.5 $\mu$s to complete so that result can feed back into the next input of the computation. The speech stream synthesizer circuit 1implementation of Fig. 3 is very fast. A computational model of the speech stream synthesizer circuit 1 discussed above estimates that a set of unnormalized log probabilities (N=8) can be calculated in 20 clock cycles. At a clock rate of 250 MHz this requires 160 ns of additional computation from the 62.5 $\mu$s budget.

Accordingly, a speech stream synthesizing circuit 1 is provided. The speech stream synthesizing circuit 1 is capable of generating a speech stream samples from a set of unnormalized log probabilities by sampling the set of unnormalized log probabilities with low latency. That is to say, the speech stream synthesizing circuit 1 calculates each speech stream sample within a timeframe suitable for outputting e.g. 16 kHz bandwidth audio. For example, in some WaveNet implementations, the complete TTS system may have a latency budget of about 62.5 $\mu$s to complete the generation of a speech stream sample. The speech stream synthesizing circuit 1 in the embodiment of Fig. 3 can generate a speech stream sample in about 20 clock cycles overall. Thus, for a clock cycle frequency of around 250 MHz, the speech stream synthesizing circuit 1 can generate speech stream samples from a set of unnormalized log probabilities in around 160 ns. As such, speech stream synthesizing circuit 1 provides value selection functionality for a TTS system using a computationally efficient hardware implementation.

Next, a method of synthesizing a speech stream sample using a processor will be described with reference to Fig. 3. As such, the method described below may be performed by the speech stream synthesizing circuit 1 described above.

The method comprises generating a set of unnormalized log probabilities for possible values of the speech stream sample using a neural network. As described above, a Neural Network Core may generate a set of unnormalized log probabilities that are provided to the speech stream synthesizing circuit 1 by the input bus 40.

The method also comprises sampling a Gumbel distribution for each of the unnormalized log probabilities of the set of unnormalized log probabilities. The Gumbel distribution samples may be generated by the Gumbel distribution sampling circuit 10 discussed above.

The method also comprises adding the samples from the Gumbel distribution to each of the respective unnormalized log probabilities to generate a set of modified log probabilities. The adding of the samples may be performed by the adding circuit 20 described above.

The method also comprises selecting the possible value of the speech stream sample with the largest modified log probability from the set of modified log probabilities as the speech stream sample. This step may be performed by the value selection circuit 30 discussed above.

The method according to embodiments of this disclosure is not limited to the speech stream synthesizing circuit 1 discussed above. For example, the method according to embodiments of this disclosure may be performed by a processor such as a central processing unit (CPU). As such, it will be appreciated that methods according to this disclosure may be performed on dedicated hardware (e.g. a hardware accelerator), or methods may be performed using a software implementation. For example, methods according to the disclosure may be performed by a processor (e.g. a CPU) executing a set of instructions stored in a memory.

It will also be appreciated that the embodiments in this description relate to the generation of a speech stream sample by a speech stream synthesizing circuit 1. It will be appreciated that the present disclosure is not limited to the synthesis of speech stream samples as discussed above. As such, the skilled person will appreciate that the methods and systems of this disclosure may equally be applied to the synthesis of audio samples from a set of unnormalized log probabilities provided by a neural network. For example a neural network may provide a set of unnormalized log probabilities for the synthesis of audio samples including: music samples, speech samples, or noise cancellation samples.

**Claims**

1. A method of synthesizing an audio stream sample using a processor comprising:

   generating a set of unnormalized log probabilities using a neural network, each unnormalized log probability associated with a possible value for the audio stream sample;
   sampling a Gumbel distribution for each of the unnormalized log probabilities;
   adding the samples from the Gumbel distribution to each of the respective unnormalized log probabilities to generate a set of modified log probabilities, each modified log probability associated with a possible value for the audio stream sample;
   selecting the possible value of the audio stream sample associated with the largest modified log probability from the set of modified log probabilities as the audio stream sample.

2. A method according to claim 1 wherein

the set of unnormalized log probabilities is generated as an array wherein an index of each unnormalized log probability in the array is associated with a respective possible value for the audio stream sample; or
the audio stream sample is an N-bit number,
wherein optionally N is at least 8, 16, 32, or 64.

3. A method according to any preceding claim, wherein
sampling the Gumbel distribution for each of the unnormalized log probabilities comprises:

generating a random number using a Pseudo Random Number Generator, PRNG, circuit (12); and
looking up an address in a lookup table based on the random number, wherein the lookup table comprises samples from a Gumbel distribution.

4. A method according to claim 3, wherein

the PNRG circuit (12) comprises a Linear-Feedback Shift Register, LFSR, circuit configured to generate the random number, wherein optionally:
the audio stream sample is an N-bit number, and
the random number generated by the LFSR circuit is an M-bit random number, where M is less than N.

5. A method according to any preceding claim, wherein
a data bus (40) provides the set of unnormalized log probabilities from the neural network to the processor in parallel, wherein the samples from the Gumbel distribution are added to the unnormalized log probabilities in parallel.

6. A method according to any preceding claim, wherein selecting the possible value of the audio stream sample associated with the largest modified log probability from the set of modified log probabilities comprises
using a plurality of comparator circuits arranged as a comparator tree structure, each comparator circuit arranged to compare two modified log probabilities and select the possible value of the audio stream sample associated with the largest modified log probability.

7. A method according to any preceding claim, wherein

the processor comprises a Field Programmable Gate Array, FPGA, or an Application Specific Integrated Circuit, ASIC; or
the audio stream sample synthesized by the method is a speech stream sample.

8. An audio stream synthesizing circuit for synthesizing an audio stream sample,

the audio stream synthesizing circuit configured to receive a set of unnormalized log probabilities from a neural network, each unnormalized log probability associated with a possible value for the audio stream sample, wherein the audio stream synthesizing circuit comprises:

a Gumbel distribution sampling circuit (10) configured to generate a plurality of samples of the Gumbel distribution;
an adding circuit (20) configured to add the plurality of samples of the Gumbel distribution to the set of unnormalized log probabilities to generate a set of modified log probabilities, each modified log probability associated with a possible value for the audio stream sample; and
a value selecting circuit (30) configured to select the possible value of the audio stream sample associated with the largest modified log probability from the set of modified log probabilities as the audio stream sample.

9. An audio stream synthesizing circuit according to claim 8, wherein

the set of unnormalized log probabilities is received as an array wherein an index of each unnormalized log probability in the array is associated with a respective possible value for the audio stream sample; or
the audio stream sample is an N-bit number,

wherein optionally N is at least 8, 16, 32, or 64.

10. An audio stream synthesizing circuit according to any one of claim 8 or claim 9, wherein the Gumbel distribution sampling circuit (10) comprises:

a lookup table circuit (14) comprising samples from a Gumbel distribution; and a Pseudo Random Number Generator, PRNG, circuit (12) configured to generate random numbers corresponding to addresses of the look-up table circuit, wherein optionally
the PNRG circuit (12) comprises a Linear-Feedback Shift Register, LFSR, circuit configured to generate the random number.

11. An audio stream synthesizing circuit according to any one of claims 8 to 10, further comprising:

a data bus (40), wherein the audio stream synthesizing circuit is configured to receive the set of unnormalized log probabilities from the neural network in parallel using the data bus,
wherein the adding circuit (20) is configured to add the samples from the Gumbel distribution (10) to the unnormalized log probabilities in parallel.

12. An audio stream synthesizing circuit according to any one of claims 8 to 11, wherein the value selecting circuit (30) comprises a plurality of comparator circuits arranged as a comparator tree structure, each comparator circuit configured to compare two modified log probabilities and select the possible value of the audio stream sample associated with the largest modified log probability.

13. An audio stream synthesizing circuit according to any one of claims 8 to 12, wherein

the audio stream synthesizing circuit is implemented as Field Programmable Gate Array, FPGA, or an Application Specific Integrated Circuit, ASIC; or
the audio stream synthesizing circuit is a speech stream synthesizing circuit (1) for synthesizing a speech stream sample.

14. A computer program comprising instructions to cause a processor to execute the steps of any one of claims 1 to 7, wherein optionally the processor is an audio stream synthesizing circuit according to any one of claims 8 to 13.

15. A computer-readable medium having stored thereon the computer program of claim 14.

**Patentansprüche**

1. Verfahren zum Synthetisieren einer Audiostream-Probe unter Verwendung eines Prozessors, mit den Schritten:

Erzeugen einer Menge von nicht-normierten Log-Wahrscheinlichkeiten unter Verwendung eines neuronalen Netzwerks, wobei jede nicht-normierte Log-Wahrscheinlichkeit mit einem möglichen Wert für die Audiostream-Probe verknüpft ist;
Abtasten einer Gumbel-Verteilung für jede der nicht-normierten Log-Wahrscheinlichkeiten;
Hinzufügen der Abtastwerte aus der Gumbel-Verteilung zu jeder der jeweiligen nicht-normierten Log-Wahrscheinlichkeiten, um einen Satz modifizierter Log-Wahrscheinlichkeiten zu erzeugen, wobei jede modifizierte Log-Wahrscheinlichkeit mit einem möglichen Wert für die Audiostream-Probe verknüpft ist;
Auswählen des möglichen Werts der Audiostream-Probe, der mit der größten modifizierten Log-Wahrscheinlichkeit aus dem Satz von modifizierten Log-Wahrscheinlichkeiten verknüpft ist, als Audiostream-Probe.

2. Verfahren nach Anspruch 1, bei dem

der Satz von nicht-normierten Log-Wahrscheinlichkeiten als Array erzeugt wird, wobei ein Index jeder nicht-normierten Log-Wahrscheinlichkeit im Array mit einem jeweiligen möglichen Wert für die Audiostream-Probe verknüpft ist; oder
die Audiostream-Probe eine N-Bit-Zahl ist, wobei optional N mindestens 8, 16, 32 oder 64 ist.

3. Verfahren nach einem der vorhergehenden Ansprüche, bei dem das Abtasten der Gumbel-Verteilung für jede der nicht-normierten Log-Wahrscheinlichkeiten umfasst:

Erzeugen einer Zufallszahl unter Verwendung eines Pseudozufallszahlengenerator-, PRNG, -Schaltung (12); und

Nachschlagen einer Adresse in einer Nachschlagetabelle auf der Grundlage der Zufallszahl, wobei die Nachschlagetabelle Abtastwerte aus einer Gumbel-Verteilung umfasst.

4. Verfahren nach Anspruch 3, bei dem die PNRG-Schaltung (12) eine Linearrückkopplungs-Schieberegister-, LFSR-, -Schaltung umfasst, die zum Erzeugen der Zufallszahl konfiguriert ist, wobei optional:

die Audiostream-Probe eine N-Bit-Zahl ist und die von der LFSR-Schaltung erzeugte Zufallszahl eine M-Bit-Zufallszahl ist, wobei M kleiner als N ist.

5. Verfahren nach einem der vorhergehenden Ansprüche, bei dem ein Datenbus (40) den Satz von nicht-normierten Log-Wahrscheinlichkeiten aus dem neuronalen Netzwerk parallel an den Prozessor liefert, wobei die Stichproben aus der Gumbel-Verteilung parallel zu den nicht-normierten Log-Wahrscheinlichkeiten addiert werden.

6. Verfahren nach einem der vorhergehenden Ansprüche, bei dem das Auswählen des möglichen Werts der Audiostream- Probe, die mit der größten modifizierten Log-Wahrscheinlichkeit aus dem Satz von modifizierten Log-Wahrscheinlichkeiten verknüpft ist, die Verwendung einer als Komparatorbaumstruktur angeordneten Mehrzahl von Komparatorschaltungen umfasst, wobei jede Komparatorschaltung eingerichtet ist, zwei modifizierte Log-Wahrscheinlichkeiten zu vergleichen und den möglichen Wert der Audiostream-Probe auszuwählen, der mit der größten modifizierten Log-Wahrscheinlichkeit verknüpft ist.

7. Verfahren nach einem der vorhergehenden Ansprüche, bei dem der Prozessor ein feldprogrammierbares Gate-Array, FPGA, oder eine anwendungsspezifische integrierte Schaltung, ASIC, umfasst; oder die durch das Verfahren synthetisierte Audiostream-Probe eine Sprachstream-Probe ist.

8. Audiostream-Syntheseschaltung zum Synthetisieren einer Audiostream-Probe, wobei die Audiostream-Syntheseschaltung konfiguriert ist, um einen Satz von nicht-normierten Log-Wahrscheinlichkeiten von einem neuronalen Netzwerk zu empfangen, wobei jede nicht-normierte Log-Wahrscheinlichkeit mit einem möglichen Wert für die Audiostream-Probe verknüpft ist, wobei die Audiostream-Syntheseschaltung umfasst:

eine Gumbel-Verteilungs-Abtastschaltung (10), die konfiguriert ist, um eine Vielzahl von Abtastwerten der Gumbel-Verteilung zu erzeugen; eine Additionsschaltung (20), die konfiguriert ist, um die Mehrzahl von Proben der Gumbel-Verteilung zu dem Satz von nicht-normierten Log-Wahrscheinlichkeiten zu addieren, um einen Satz von modifizierten Log-Wahrscheinlichkeiten zu erzeugen, wobei jede modifizierte Log-Wahrscheinlichkeit mit einem möglichen Wert für die Audiostream-Probe verknüpft ist; und eine Wertauswahlschaltung (30), die konfiguriert ist, um den möglichen Wert der Audiostream-Probe, der mit der größten modifizierten Log-Wahrscheinlichkeit aus dem Satz von modifizierten Log-Wahrscheinlichkeiten verknüpft ist, als die Audiostream-Probe auszuwählen.

9. Audiostream-Syntheseschaltung nach Anspruch 8, bei der der Satz von nicht-normierten Log-Wahrscheinlichkeiten als Array empfangen wird, wobei ein Index jeder nicht-normierten Log-Wahrscheinlichkeit im Array einem jeweiligen möglichen Wert für die Audiostream-Probe zugeordnet ist; oder

die Audiostream-Probe eine N-Bit-Zahl ist, wobei N optional mindestens 8, 16, 32 oder 64 ist.

10. Audiostream-Syntheseschaltung nach einem der Ansprüche 8 oder 9, bei der die Gumbel-Verteilungs-Abtastschaltung (10) umfasst:

eine Nachschlagetabellenschaltung (14), die Abtastwerte aus einer Gumbel-Verteilung enthält; und eine Pseudozufallszahlengenerator-, PRNG-, -Schaltung (12), die konfiguriert ist, um Zufallszahlen entsprechend den Adressen der Nachschlagetabellenschaltung zu erzeugen, wobei die PNRG-Schaltung (12) optional eine Linearrückkopplungs-Schieberegisterschaltung, LFSR, umfasst, die konfiguriert ist, um die Zufallszahl zu erzeugen.

**11.** Audiostream-Syntheseschaltung nach einem der Ansprüche 8 bis 10, die ferner umfasst:

einen Datenbus (40), wobei die Audiostream-Syntheseschaltung konfiguriert ist, um den Satz von nicht-normierten Log-Wahrscheinlichkeiten vom neuronalen Netzwerk parallel unter Verwendung des Datenbusses zu empfangen,
wobei die Additionsschaltung (20) konfiguriert ist, um die Abtastwerte aus der Gumbel-Verteilung (10) parallel zu den nicht normierten Log-Wahrscheinlichkeiten zu addieren.

**12.** Audiostream-Syntheseschaltung gemäß einem der Ansprüche 8 bis 11, bei der
die Wertauswahlschaltung (30) eine als Komparatorbaumstruktur angeordnete Mehrzahl von Komparatorschaltungen umfasst, wobei jede Komparatorschaltung konfiguriert ist, um zwei modifizierte Log-Wahrscheinlichkeiten zu vergleichen und den möglichen Wert der Audiostream-Probe auszuwählen, der mit der größten modifizierten Log-Wahrscheinlichkeit verknüpft ist.

**13.** Audiostream-Syntheseschaltung nach einem der Ansprüche 8 bis 12, bei der die Audiostream-Syntheseschaltung als feldprogrammierbares Gate-Array, FPGA, oder als anwendungsspezifischer integrierter Schaltkreis, ASIC, implementiert ist; oder
die Audiostream-Syntheseschaltung eine Sprachstream-Syntheseschaltung (1) zum Synthetisieren einer Sprachstream-Probe ist.

**14.** Computerprogramm, das Anweisungen umfasst, die einen Prozessor veranlassen, die Schritte gemäß einem der Ansprüche 1 bis 7 auszuführen, wobei optional der Prozessor eine Audiostream-Syntheseschaltung gemäß einem der Ansprüche 8 bis 13 ist.

**15.** Computerlesbares Medium, auf dem das Computerprogramm gemäß Anspruch 14 gespeichert ist.

## Revendications

**1.** Procédé de synthèse d'un échantillon de flux audio à l'aide d'un processeur comportant :

la génération d'un ensemble de probabilités logarithmiques non normalisées à l'aide d'un réseau neuronal, chaque probabilité logarithmique non normalisée étant associée à une valeur possible pour l'échantillon de flux audio ;
l'échantillonnage d'une distribution de Gumbel pour chacune des probabilités logarithmiques non normalisées ;
l'ajout des échantillons de la distribution de Gumbel à chacune des probabilités logarithmiques non normalisées respectives pour générer un ensemble de probabilités logarithmiques modifiées, chaque probabilité logarithmique modifiée étant associée à une valeur possible pour l'échantillon de flux audio ;
la sélection de la valeur possible de l'échantillon de flux audio associé à la plus grande probabilité logarithmique modifiée parmi l'ensemble de probabilités logarithmiques modifiées en tant qu'échantillon de flux audio.

**2.** Procédé selon la revendication 1, dans lequel

l'ensemble de probabilités logarithmiques non normalisées est généré sous la forme d'un réseau dans lequel un indice de chaque probabilité logarithmique non normalisée dans le réseau est associé à une valeur possible respective pour l'échantillon de flux audio ; ou
l'échantillon de flux audio est un nombre à N bits,
dans lequel N est facultativement au moins 8, 16, 32 ou **64.**

**3.** Procédé selon une quelconque revendication précédente, dans lequel
l'échantillonnage de la distribution de Gumbel pour chacune des probabilités logarithmiques non normalisées comporte :

la génération d'un nombre aléatoire à l'aide d'un circuit de générateur de nombres pseudo-aléatoires, PRNG, (12) ; et

la consultation d'une adresse dans une table de consultation sur la base du nombre aléatoire, dans lequel la table de consultation comporte des échantillons d'une distribution de Gumbel.

4. Procédé selon la revendication 3, dans lequel

le circuit PNRG (12) comporte un circuit de registre à décalage rebouclé, LFSR, configuré pour générer le nombre aléatoire, dans lequel facultativement :

l'échantillon de flux audio est un nombre à N bits, et
le nombre aléatoire généré par le circuit LFSR est un nombre aléatoire à M bits, où M est inférieur à N.

5. Procédé selon une quelconque revendication précédente, dans lequel

un bus de données (40) fournit l'ensemble de probabilités logarithmiques non normalisées du réseau neuronal au processeur en parallèle, dans lequel les échantillons de la distribution de Gumbel sont ajoutés aux probabilités logarithmiques non normalisées en parallèle.

6. Procédé selon une quelconque revendication précédente, dans lequel la sélection de la valeur possible de l'échantillon de flux audio associé à la plus grande probabilité logarithmique modifiée parmi l'ensemble de probabilités logarithmiques modifiées comporte

l'utilisation d'une pluralité de circuits comparateurs agencés en tant qu'arborescence de comparateurs, chaque circuit comparateur étant agencé pour comparer deux probabilités logarithmiques modifiées et sélectionner la valeur possible de l'échantillon de flux audio associé à la plus grande probabilité logarithmique modifiée.

7. Procédé selon une quelconque revendication précédente, dans lequel

le processeur comporte un réseau prédiffusé programmable par l'utilisateur, FPGA, ou un circuit intégré à application spécifique, ASIC ; ou
l'échantillon de flux audio synthétisé par le procédé est un échantillon de flux vocal.

8. Circuit de synthèse de flux audio pour synthétiser un échantillon de flux audio,

le circuit de synthèse de flux audio étant configuré pour recevoir un ensemble de probabilités logarithmiques non normalisées d'un réseau neuronal, chaque probabilité logarithmique non normalisée étant associée à une valeur possible pour l'échantillon de flux audio,
dans lequel le circuit de synthèse de flux audio comporte :

un circuit d'échantillonnage de distribution de Gumbel (10) configuré pour générer une pluralité d'échantillons de la distribution de Gumbel ;
un circuit additionneur (20) configuré pour ajouter la pluralité d'échantillons de la distribution de Gumbel à l'ensemble de probabilités logarithmiques non normalisées pour générer un ensemble de probabilités logarithmiques modifiées, chaque probabilité logarithmique modifiée étant associée à une valeur possible pour l'échantillon de flux audio ; et
un circuit de sélection de valeur (30) configuré pour sélectionner la valeur possible de l'échantillon de flux audio associé à la plus grande probabilité logarithmique modifiée parmi l'ensemble de probabilités logarithmiques modifiées en tant qu'échantillon de flux audio.

9. Circuit de synthèse de flux audio selon la revendication 8, dans lequel

l'ensemble de probabilités logarithmiques non normalisées est reçu sous la forme d'un réseau dans lequel un indice de chaque probabilité logarithmique non normalisée dans le réseau est associé à une valeur possible respective pour l'échantillon de flux audio ; ou
l'échantillon de flux audio est un nombre à N bits,
dans lequel N est facultativement au moins 8, 16, 32 ou 64.

10. Circuit de synthèse de flux audio selon l'une quelconque des revendications 8 ou 9, dans lequel

le circuit d'échantillonnage de distribution de Gumbel (10) comporte :

un circuit de table de consultation (14) comportant des échantillons d'une distribution de Gumbel ; et un circuit de générateur de nombres pseudo-aléatoires, PRNG (12) configuré pour générer des nombres aléatoires correspondant à des adresses du circuit de table de consultation, dans lequel facultativement

le circuit PNRG (12) comporte un circuit de registre à décalage rebouclé, LFSR, configuré pour générer le nombre aléatoire.

11. Circuit de synthèse de flux audio selon l'une quelconque des revendications 8 à 10, comportant en outre :

un bus de données (40), dans lequel le circuit de synthèse de flux audio est configuré pour recevoir l'ensemble de probabilités logarithmiques non normalisées du réseau neuronal en parallèle à l'aide du bus de données, dans lequel le circuit additionneur (20) est configuré pour ajouter les échantillons de la distribution de Gumbel (10) aux probabilités logarithmiques non normalisées en parallèle.

12. Circuit de synthèse de flux audio selon l'une quelconque des revendications 8 à 11, dans lequel le circuit de sélection de valeur (30) comporte une pluralité de circuits comparateurs agencés en tant qu'arborescence de comparateurs, chaque circuit comparateur étant configuré pour comparer deux probabilités logarithmiques modifiées et sélectionner la valeur possible de l'échantillon de flux audio associé à la plus grande probabilité logarithmique modifiée.

13. Circuit de synthèse de flux audio selon l'une quelconque des revendications 8 à 12, dans lequel

le circuit de synthèse de flux audio est mis en œuvre en tant que réseau prédiffusé programmable par l'utilisateur, FPGA, ou circuit intégré à application spécifique, ASIC ; ou
le circuit de synthèse de flux audio est un circuit de synthèse de flux vocal (1) pour la synthèse d'un échantillon de flux vocal.

14. Programme informatique comportant des instructions destinées à amener un processeur à exécuter les étapes de l'une quelconque des revendications 1 à 7, dans lequel le processeur est facultativement un circuit de synthèse de flux audio selon l'une quelconque des revendications 8 à 13.

15. Support lisible par ordinateur sur lequel est stocké le programme informatique selon la revendication 14.

## Fig. 1

## Fig. 2

**Fig. 3**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020265829 A

- US 2020051583 A